**Europäisches Patentamt**

**European Patent Office**

**Office européen des brevets**

(19)

(11) Veröffentlichungsnummer: **0 282 905 B1**

(12) **EUROPÄISCHE PATENTSCHRIFT**

(45) Veröffentlichungstag der Patentschrift: **21.08.91**

(51) Int. Cl.⁵: **A61C 13/083**, A61C 19/00

(21) Anmeldenummer: **88103780.8**

(22) Anmeldetag: **10.03.88**

(54) **Verfahren und Vorrichtungen zur Herstellung porenfreier Zahnformkörper.**

(30) Priorität: **14.03.87 DE 3708343**
**14.07.87 DE 3723233**

(43) Veröffentlichungstag der Anmeldung:
**21.09.88 Patentblatt 88/38**

(45) Bekanntmachung des Hinweises auf die
Patenterteilung:
**21.08.91 Patentblatt 91/34**

(84) Benannte Vertragsstaaten:
**AT BE CH DE ES FR GB GR IT LI LU NL SE**

(56) Entgegenhaltungen:
**CH-A- 269 648        DE-A- 3 435 885**
**DE-U- 8 130 239       FR-A- 768 970**
**FR-A- 1 019 954       US-A- 2 469 525**

(73) Patentinhaber: **Staude, Aribo**
**Falkenstrasse 18**
**W-7053 Kernen(DE)**

(72) Erfinder: **Staude, Aribo**
**Falkenstrasse 18**
**W-7053 Kernen(DE)**

(74) Vertreter: **Hoeger, Stellrecht & Partner**
**Uhlandstrasse 14 c**
**W-7000 Stuttgart 1(DE)**

## Beschreibung

Die Erfindung betrifft ein Verfahren zur Herstellung porenfreier Formkörper - insbesondere Zahnformkörper aus Porzellan oder Keramik -, bei welchem eine pulverisierte Formmasse mit einer Flüssigkeit vermischt und anschließend gebrannt wird.

Des weiteren betrifft die Erfindung Vorrichtungen zur Herstellung porenfreier Formkörper - insbesondere Zahnformkörper aus Porzellan oder Keramik - mit mindestens einem Anmischvolumen.

Die Herstellung von Zahnformkörpern erfolgt wie in US-A-2469525 und CH-A-269648 beschrieben bisher so, daß Porzellanpulver oder Keramikpulver mit Flüssigkeit auf einer Anmischplatte, beispielsweise mit einem Pinsel oder Spatel, vorsichtig vermischt wird. Das vorsichtige Vermischen ist deshalb notwendig, um bei diesem Vorgang möglichst wenig Lufteinschlüsse in der Masse zu erzeugen. Anschliessend wird der jeweilige Zahn- oder Brückenersatz geformt und dann die Form gebrannt. Wenn nun während des Anmischens Lufteinschlüsse - insbesondere Microlufteinschlüsse - in der angemischten Zahnformmasse entstanden sind, hat ein Porzellanzahn nach dem Brennen ein milchiges Aussehen, bisweilen erscheint ein solcher grießig oder es zeigen sich sogar an einer Oberfläche des gebrannten Zahnformkörpers sichtbare Blasen. Dies ist unerwünscht und soll daher vermieden werden.

Obwohl das Problem des Entstehens der feinen Lufteinschlüsse während des Anmischens von Porzellan - oder Keramik-Pulver seit langem bekannt ist, wurde hierzu bislang kein brauchbares Verfahren vorgeschlagen. Die einzigen Vorschläge sind darauf gerichtet, mit möglichst ruhigen und gleichmäßigen Handbewegungen den Pinsel oder Spatel beim Anmischen zu füren und dadurch möglichst wenig Lufteinschlüsse zu erzeugen. Oftmals wird zusätzlich beim Aufbauen und Schichten von Porzellan- oder Keramikmassen durch Klopfen und Pinseln noch versucht, eine bessere Verdichtung zu erreichen, womit allerdings eine Blasenbildung nicht verhindert werden kann.

Ausgehend von diesem Stand der Technik liegt der Erfindung die Aufgabe zugrunde, ein Verfahren der gattungsgemäßen Art zu schaffen, bei welchem ohne große Sorgfalt beim Anmischen von Porzellan- oder Keramik-Pulver stets ein porenfreier Formkörper herstellbar ist.

Diese Aufgabe wird bei einem Verfahren der eingangs beschriebenen Art erfindungsgemäß dadurch gelöst, daß die mit Flüssigkeit vermischte, pulverisierte Formmasse vor dem Brennen einer Unterdruckbehandlung bei reduziertem Atmosphärendruck unterzogen wird.

Dieses Verfahren hat den großen Vorteil, daß man dem Vermischen der pulverisierten Formmasse mit der Flüssigkeit keine Beachtung mehr zu schenken braucht, da durch die Unterdruckbehandlung im wesentlichen sämtliche Lufteinschlüsse aus der mit Flüssigkeit vermischten Zahnformmasse entfernt werden, so daß ein anschließend gebrannter Formkörper stets frei von Lufteinschlüssen und somit stets frei von Poren ist und eine glatte Oberfläche aufweist. Die Porenfreiheit hat auch zur Folge, daß der Formkörper selbst eine höhere Dichte aufweist und damit auch härter ist.

Schließlich ist die Formmasse nach der Unterdruckbehandlung besser verarbeitbar, da die Masse auf einer Metalloberfläche spannungsfrei zerfließt und insbesondere auch in Mikrofurchen einer Metalloberfläche eindringt.

Für die erfindungsgemäße Unterdruckbehandlung reicht es aus, wenn der Druck unter den Atmosphärendruck erniedrigt wird, da damit prinzipiell sämtliche Lufteinschlüsse entfernt werden können. Damit das erfindungsgemäße Verfahren jedoch relativ schnell durchgeführt werden kann, ist es vorteilhaft, wenn der Druck auf mindestens 0,3 bar, noch besser 0,1 bar, reduziert wird.

Bei einer derartigen Vorgehensweise ist es erforderlich, daß die Unterdruckbehandlung mindestens eine Minute dauert. Damit ist sichergestellt, daß im wesentlichen sämtliche Lufteinschlüsse aus der mit Flüssigkeit vermischten pulverisierten Formmasse entfernt sind. Bevorzugterweise wird mit einer Unterdruckbehandlung von 2 Minuten oder 3 Minuten oder noch länger gearbeitet.

Insbesondere bei zähen Massen, bei denen die Lufteinschlüsse nicht sehr leicht aus der mit Flüssigkeit vermischten pulverisierten Zahnformmasse nach außen wandern können, ist es vorteilhaft, wenn die mit Flüssigkeit vermischte, pulverisierte Zahnformmasse einer Rüttelbehandlung unterzogen wird. Dies hat außerdem noch den Vorteil, daß die sich während der Unterdruckbehandlung aufblähende Formmasse in sich zusammenfällt und damit noch besser verdichtet wird, so daß die Kristalle der Formmasse möglichst dicht gepackt aneinanderliegen. Diese Rüttelbehandlung sollte dann zweckmäßigerweise mindestens während der Unterdruckbehandlung erfolgen, es ist jedoch aber auch möglich, bereits vor der Unterdruckbehandlung mit der Rüttelbehandlung zu beginnen.

Des weiteren liegt der Erfindung die Aufgabe zugrunde, Vorrichtungen zur Durchführung des erfindungsgemäßen Verfahrens zu schaffen.

Diese Aufgabe wird erfindungsgemäß bei einer Anmischplatte siche Stand der Technik DE-B-3435885 zur Herstellung porenfreier Formköper - vorzugsweise Zahnformkörper - aus Porzellan oder Keramik, insbesondere zur Durchführung des Verfahrens nach einem der Ansprüche 1 bis 5, dadurch gelöst, daß das Anmischvolumen eine Vertiefung in der Anmischplatte ist.

Der Vorteil einer derartigen Ausgestaltung der Anmischplatte wird darin gesehen, daß das Vermischen der pulverisierten Formmasse mit der Flüssigkeit in einfacher und für Laborzwecke geeigneter Art und Weise erfolgen kann, da in der Regel stets geringe Mengen pulverisierter Formmasse vermischt und einer Unterdruckbehandlung unterzogen werden sollen. Außerdem hat die Verwendung einer Anmischplatte mit einer Vertiefung den Vorteil, daß eine sehr wirkungsvolle Unterdruckbehandlung der mit Flüssigkeit vermischten Formmasse möglich ist, da diese in der Vertiefung mit einer sehr großen Oberfläche einem verringerten Umgebungsdruck ausgesetzt ist und damit eingeschlossene Luftblasen auch bei zähen Massen in relativ kurzer Zeit aus diesen entweichen.

Für die Herstellung eines Porzellanzahns ist es in der Regel jedoch nicht ausreichend, lediglich eine einzige Porzellanmasse anzumischen. Es ist im Gegenteil so, daß vielfach ein derartiger Porzellanzahn aus fünf und mehr Schichten verschiedener und verschiedenfarbiger Porzellane hergestellt werden muß. Aus diesem Grund ist der eigentlich zeitlimitierende Schritt bei dem erfindungsgemäßen Verfahren in der Unterdruckbehandlung zu sehen. Um diese Unterdruckbehandlung möglichst rationell durchführen zu können, ist es vorteilhaft, wenn die Anmischplatte mehrere Vertiefungen aufweist, so daß in diesen die Formmassen für die einzelnen Schichten angemischt und dann diese angemischten Formmassen gemeinsam von Lufteinschlüssen befreit werden können.

Da von den unterschiedlichen Formmassen auch unterschiedliche Mengen benötigt werden, hat es sich als zweckmäßig erwiesen, daß die Vertiefungen eine unterschiedliche Größe aufweisen.

Die Vertiefungen können grundsätzlich einen beliebigen Querschnitt aufweisen. Die einfachste Form wird eine kugelkappenförmige Ausbildung der Vertiefungen sein. Da die angemischte Formmasse jedoch in sehr kleinen Portionen entnommen wird, hat es sich als zweckmäßig erwiesen, wenn die Vertiefungen nach zumindest einer Seite hin flach auslaufend ausgebildet sind, so daß eine feindosierte Entnahme der Formmassen erleichtert ist.

Um nach der Unterdruckbehandlung noch verschiedene Formmassen miteinander vermischen zu können, ist es zweckmäßig, wenn die Anmischplatte eine zwischen den Vertiefungen liegende Arbeitsfläche trägt.

Als besonders günstig hat es sich erwiesen, wenn die Anmischplatte aus Glas oder Porzellan ist, da diese sich leicht von angemischter Formmasse reinigen läßt. Aus Gründen der Bruchsicherheit ist es jedoch günstiger, wenn die Anmischplatte aus Kunststoffmaterial hergestellt ist, das vorteilhafterweise flüssigkeitsabweisend ist oder zumindest keine Flüssigkeit aufnimmt, so daß kein starkes Anhaften der Formmasse erfolgt und damit dieselben Vorteile hinsichtlich einer leichten Reinigung der Anmischplatte vorliegen.

Um verschiedene Farben der einzelnen Formmassen in den einzelnen Vertiefungen leicht erkennen zu können, ist es günstig, wenn die Anmischplatte aus weißem Material hergestellt ist.

Da die angemischten Formmassen in der Regel nicht sofort nach der Unterdruckbehandlung verwendet werden oder vollständig aufgebraucht werden, ist es bei einem besonders bevorzugten Ausführungsbeispiel vorteilhaft, wenn die Anmischplatte mit einem das Anmischvolumen übergreifenden Deckel verschließbar ist.

Besonders günstig ist es dabei, wenn der Deckel das Anmischvolumen vakuumdicht abschließend ausgebildet ist, da dann die angemischten Formmassen nach ihrer Unterdruckbehandlung über längere Zeit aufbewahrt werden können und verwendungsfähig bleiben. Diese Ausführungsform einer erfindungsgemäßen Anmischplatte hat den großen Vorteil, daß in rationeller Weise eine Unterdruckbehandlung bei einer ganzen Reihe von angemischten Formmassen durchgeführt werden kann und ein Aufbrauchen dieser Formmassen über einen längeren Zeitraum ohne Beeinträchtigung von deren Verarbeitungseigenschaften möglich ist, da diese Formmassen unter dem vakuumdicht abschließenden Deckel über längere Zeit in einem Vakuum aufbewahrt werden können.

Um vor allem eine über lange Zeit dauerhafte Abdichtung zwischen dem Deckel und der Anmischplatte zu ermöglichen, ist vorgesehen, daß die Dichtflächen zwischen Deckel und der Anmischplatte im wesentlichen quer zu einer Einwirkungsrichtung des bei evakuiertem Anmischvolumen auf den Deckel und die Anmischplatte wirkenden atmosphärischen Drucks verlaufen und durch diesen gegeneinander preßbar sind, so daß der atmosphärische Druck die Dichtflächen gegeneinander drückt und dadurch eine dauerhafte Aufrechterhaltung des Vakuums in dem Anmischvolumen bewirkt. Noch vorteilhafter ist es jedoch, wenn die Dichtflächen zwischen dem Deckel und der Anmischplatte im wesentlichen senkrecht zu einer Einwirkungsrichtung des bei evakuiertem Anmischvolumen auf den Deckel und die Anmischplatte wirkenden atmosphärischen Drucks verlaufen.

Um nach der Unterdruckbehandlung ein Eindringen von Luft in das Anmischvolumen zu verhindern, ist es erforderlich, daß die Dichtflächen gegeneinander vorgespannt sind, so daß ein für das Gegeneinanderpressen der Dichtflächen verantwortlicher Druckgradient zwischen dem Anmischvolumen und der Umgebung aufgebaut werden kann.

Bei den vorstehend beschriebenen Ausführungsbeispielen können die Dichtflächen beispielsweise mit einer eingelegten Dichtung versehen sein. Um die Handhabung der erfindungsgemäßen Anmischplatte und des Deckels noch einfacher zu gestalten, hat es sich als zweckmäßig erwiesen, wenn der Deckel mit weichelastischen Dichträndern versehen ist, so daß sich das zusätzliche Vorsehen einer Dichtung erübrigt.

Die einfachste Möglichkeit der Ausbildung eines Deckels sieht vor, daß der Deckel selbst aus elastischem Material hergestellt ist.

Um insbesondere bei der Verwendung mehrerer Anmischplatten und deren gleichzeitiger Unterdruckbehandlung eine spätere Identifikation der auf den einzelnen Anmischplatten vorbereiteten Formmassen zu erleichtern, ist es vorteilhaft, wenn der Deckel aus durchsichtigem Material ist.

Insbesondere bei der Unterdruckbehandlung mehrerer mit einem Deckel versehener Anmischplatten sollten diese in einfacher Weise übereinander stapelbar sein. Es hat sich daher als nützlich erwiesen, wenn der Deckel auf seiner Oberseite und die Anmischplatte auf ihrer Unterseite bei einer Stapelung einer Anmischplatte auf einem Deckel formschlüssig ineinandergreifende Passungselemente aufweisen. Diese Passungselemente sind bevorzugt aus einer Ringnut und einem Wulst gebildet.

Ein Arbeiten mit einer erfindungsgemäßen Anmischplatte wird zusätzlich noch dadurch erleichtert, daß die Anmischplatte um eine im wesentlichen senkrecht auf ihrer Oberfläche stehende Achse gegenüber einem Fußteil drehbar ist.

Ferner wird die vorstehend genannte Aufgabe, betreffend die Schaffung einer Vorrichtung zur Durchführung des erfindungsgemäßen Verfahrens durch eine Vorrichtung zur Herstellung porenfreier Formkörper - vorzugsweise Zahnformkörper - aus Porzellan oder Keramik, insbesondere zur Durchführung des Verfahrens nach einem der Ansprüche 1 bis 5, dadurch gelöst, daß ein ein Anmischvolumen aufnehmendes Unterdruckgefäß und eine damit verbundene Unterdruckpumpeinrichtung vorgesehen sind. Mit einer derartigen Vorrichtung läßt sich in einfacher und zweckmäßiger Weise das erfindungsgemäße Verfahren durchführen.

Um zusätzlich zu der Unterdruckbehandlung ein Rütteln der angemischten Formmasse möglich zu machen, ist vorgesehen, daß das Anmischvolumen durch einen Rüttler in Schwingungen versetzbar ist. Eine sehr einfache Ausbildung des erfindungsgemäßen Unterdruckgefäßes sieht vor, daß dieses ein Bodenteil und einen Deckel umfaßt. Um die vorstehend beschriebenen Anmischplatten auf dem Bodenteil fixieren zu können, ist es vorteilhaft, wenn das Bodenteil eine Aufnahme für die vorstehend beschriebenen Anmischplatten aufweist.

Dabei hat es sich, insbesondere um eine Geräuschverminderung während des Rüttelns zu erreichen, als vorteilhaft erwiesen, wenn die Aufnahmen aus elastischem Material sind. Hierbei ist beispielsweise daran zu denken, daß die Aufnahme ein Ringwulst ist, welcher in eine entsprechend gestaltete bodenseitige Ausnehmung einer auf das Bodenteil aufgesetzten Anmischplatte eingreift. Es ist aber auch bei einer vereinfachten Ausführungsform möglich, daß die Aufnahme eine Auflage aus elastischem Material ist, auf welche die Anmischplatte aufsetzbar ist.

Ein bevorzugtes Ausführungsbeispiel sieht vor, daß das Bodenteil auf dem Rüttler sitzt, so daß das Unterdruckgefäß als Ganzes in Schwingungen versetzbar ist.

Besonders zur rationellen Durchführung des erfindungsgemäßen Verfahrens hat es sich als günstig erwiesen, wenn das Unterdruckgefäß mehrere aufeinander gestapelte Anmischplatten aufnimmt.

Bei einer vereinfachten Form der erfindungsgemäßen Vorrichtung ist vorgesehen, daß das Bodenteil die Anmischplatte umfaßt.

Eine vorteilhafte Ausführungsform des Deckelteils des Unterdruckgefäßes sieht vor, daß dieses eine Unterdruckglocke ist, die in beliebiger Form ausgebildet sein kann.

Weitere Merkmale und Vorteile sind Gegenstand der folgenden Beschreibung sowie der zeichnerischen Darstellung einiger Ausführungsbeispiele. In der Zeichnung zeigen:

Fig. 1      eine Draufsicht auf eine erfindungsgemäße Anmischplatte;

Fig. 2      einen Schnitt längs Linie 2-2 in Fig. 1;

Fig. 3      einen Schnitt längs Linie 3-3 in Fig. 1 und

Fig. 4      eine teilweise aufgebrochene Darstellung der erfindungsgemäßen Vorrichtung.

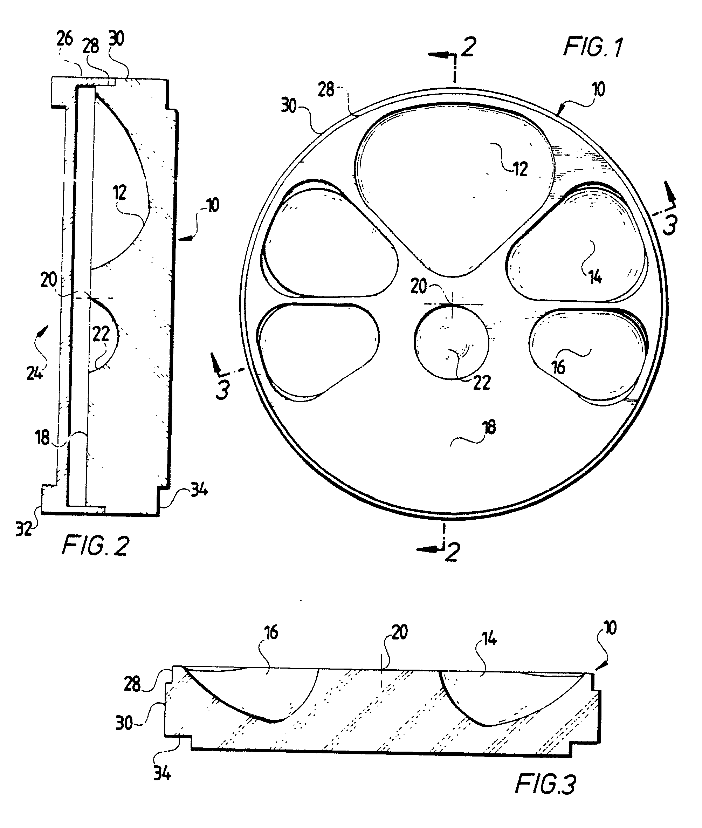

Fig. 1 zeigt im einzelnen ein erstes Ausführungsbeispiel einer erfindungsgemäßen Anmischplatte 10, welche vorzugsweise die Form einer kreisrunden Scheibe aufweist. In ihrer Oberfläche sind mehrere Vertiefungen 12, 14 und 16 angeordnet, welche in einzelnen Kreisausschnitten liegen. Dabei liegt die Vertiefung 12 in einem viertel Kreisausschnitt, während die Vertiefungen 14 und 16, die sich beiderseits an die Vertiefung 12 anschließen, ebenfalls zusammen auf einem viertel Kreisausschnitt liegen. Vorzugsweise ist die Vertiefung 14 größer als die Vertiefung 16. Zwischen den Vertiefungen 16 trägt ein weiterer viertel Kreisausschnitt eine Arbeitsfläche 18, welche in ihrem einem Zentrum 20 zugeordneten Bereich eine zusätzliche Vertiefung 22 aufweist.

Erfindungsgemäß ist die Vertiefung 12 zur Aufnahme der Hauptmenge des zu verarbeitenden Porzellan- und Keramik-Pulvers vorgesehen, während in den Vertiefungen 14 und 16 zusätzliche Pulvermassen, beispielsweise für die Herstellung von Zahnschmelz, für die Herstellung eines Transparentüberzugs, für die Herstellung einer Kerbmasse oder für weitere Farben Platz finden. Die Vertiefung 22 ist zur Aufnahme zusätzlicher Anmischoder Verdünnungsflächen vorgesehen, während die Arbeitsfläche 18 frei ist für individuelle zusätzliche Vermischungsarbeiten.

Die Vertiefungen 12 bis 16 und 22 können in radialer Richtung einen ungefähr halbkreisförmigen Querschnitt aufweisen, wie in Fig. 2 dargestellt. Bevorzugterweise wird jedoch ein Querschnitt der Vertiefung gewählt, welcher in radialer Richtung nach außen hin flach ausläuft, wie in Fig. 3 exemplarisch für alle Vertiefungen am Beispiel der Vertiefungen 14 und 16 dargestellt ist.

Wie in Fig. 2 dargestellt, ist die Anmischplatte 10 durch einen Deckel 24 verschließbar, welcher zweckmäßigerweise die gesamte Anmischplatte übergreift und mit einem zylindrisch angeformten Rand 26 in eine in eine Umfangsfläche 30 der Anmischplatte eingearbeitete stufenförmige Ringnut 28 eingreift.

Erfindungsgemäß ist der Rand 26 aus weichelastischem Material hergestellt, so daß dieser dichtend mit der Ringnut 28 abschließt und damit einen vakuumdichten Verschluß der Vertiefungen 12 bis 16 und 22 erlaubt.

Um mehrere mit dem Deckel 24 verschlossene Anmischplatten 10 aufeinander stapeln zu können, ist jeder Deckel 24 mit einem Ringwulst 32 versehen, welcher beim Stapeln in eine bodenseitig an der darauffolgenden Anmischplatte angeordnete Nut 34 eingreift, so daß der Ringwulst 32 und die Nut 34 formschlüssig ein Verrutschen der aufeinander gestapelten Anmischplatten 10 mit ihrem Deckel 24 verhindern.

Bei dem in den Fig. 1 bis 3 dargestellten Ausführungsbeispiel ist vorgesehen, daß die Anmischplatte 10 selbst aus Glas ist, während der Deckel 24 als Ganzes aus einem elastischen Kunststoffmaterial hergestellt ist, so daß auch der Rand 26 eine ausreichende Elastizität hat, um vakuumdicht mit der Ringnut 28 abzuschließen.

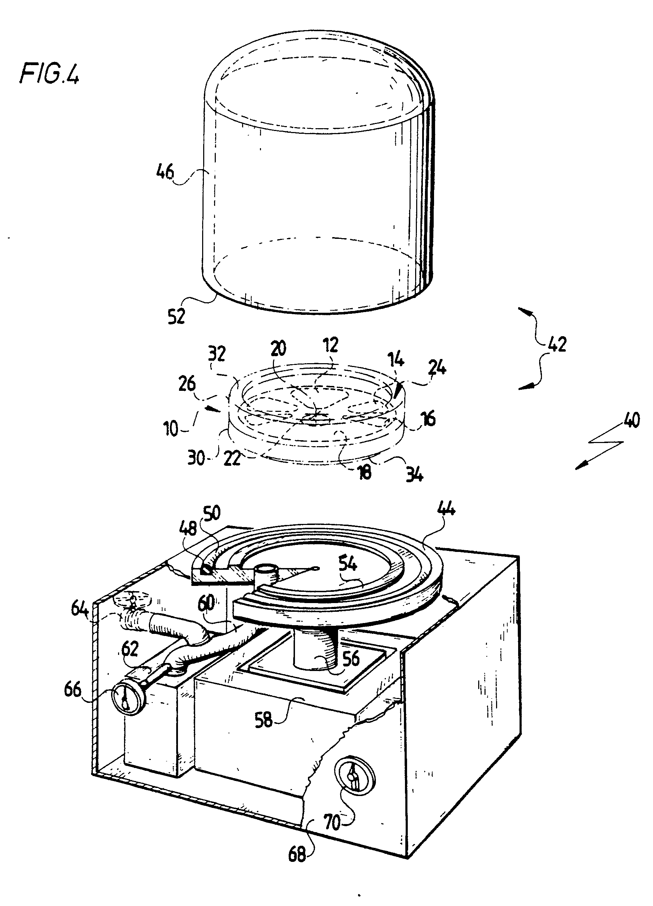

Eine Vorrichtung zur Durchführung des erfindungsgemäßen Verfahrens ist in Fig. 4 dargestellt und als Ganzes mit 40 bezeichnet.

Diese Vorrichtung umfaßt ein Unterdruckgefäß 42, zusammengesetzt aus einem kreisrunden plattenförmigen Bodenteil 44 sowie einer auf dieses Bodenteil 44 aufsetzbaren Glocke 46. Vorzugsweise ist das Bodenteil 44 in seinem äußeren Randbereich mit einer kreisringförmigen Nut 48 versehen, in welcher ein O-Ring als Dichtung 50 angeordnet ist. Diese Nut 48 ist mindestens so breit wie ein unterer Randbereich 52 der Glocke 46, so daß diese mit ihrem unteren Randbereich 52 in die Nut 48 eingreifen und an der Dichtung 50 anliegen kann. Damit ist die Glocke 46 gegen eine seitliche Verschiebung relativ zum Bodenteil 44 gesichert und außerdem ein vakuumdichter Abschluß zwischen dem Bodenteil 44 und der Glocke 46 möglich.

Ein Innendurchmesser der Glocke 46 ist vorzugsweise so gewählt, daß diese über einen Satz aufeinander gestapelter Anmischplatten 10 samt Deckel 24 stülpbar ist, wobei erfindungsgemäß das Bodenteil 44 selbst noch einen Gummiringwulst 54 trägt, welcher dem Ringwulst 32 auf dem Deckel 24 entspricht und in die Nut 34 der auf das Bodenteil 44 aufgesetzten Anmischplatte 10 eingreift.

An das Bodenteil 44 ist vorzugsweise konzentrisch ein Haltestutzen 56 angeformt, durch welchen das gesamte Bodenteil 44 auf einem Rüttler 58 sitzt. Dieser Rüttler versetzt das gesamte Bodenteil und somit das gesamte Unterdruckgefäß in Schwingungen.

Außerdem mündet in das Bodenteil 44 eine Saugleitung 60, welche mit einer Unterdruckpumpeinrichtung 62 verbunden ist, welche zum Evakuieren des gesamten Unterdruckgefäßes 42 dient. An die Saugleitung 60 sind außerdem noch ein Belüftungsventil 64 sowie ein Manometer 66 zum Ablesen des Unterdrucks angeschlossen.

Bei dem in Fig. 4 dargestellten bevorzugten Ausführungsbeispiel sind der Rüttler 48 sowie die Unterdruckpumpeinrichtung 62, das Belüftungsventil 64 sowie das Manometer 66 in einem Gehäuse 68 angeordnet. Die ganze Anordnung kann vorzugsweise noch mit einer Zeitschaltuhr 70 verbunden sein, welche sowohl den Rüttler 58 als auch die Unterdruckpumpeinrichtung für eine vorwählbare Zeit einschaltet.

Die erfindungsgemäße Vorrichtung funktioniert so, daß zunächst in den Vertiefungen 12, 14 und 16 der Anmischplatten 10 die einzelnen Keramikpulver oder Porzellanpulver mit der Anmischflüssigkeit, beispielsweise unter Zuhilfenahme eines Pinsels oder eines Spatels, angemischt werden. Anschließend werden die Anmischplatten 10 mit dem Deckel 24 verschlossen, aufeinander gestapelt und auf das Bodenteil 44 aufgesetzt. Das Unterdruckgefäß 42 wird durch Aufsetzen der Glocke 46 verschlossen und anschließend wird über die Zeitschaltuhr 70 die Behandlungsdauer eingestellt, die vorzugsweise mindestens eine Minute zuzüglich der Abpumpzeit beträgt.

Während des Abpumpens des Unterdruckgefäßes 42 entsteht in dessen Innerem ein Unterdruck, der zur Folge hat, daß auch der in den Vertiefungen vorliegende Normaldruck reduziert wird, da der Rand 26 eines Deckels 24 bei einem von innen nach außen gerichteten Druckgradient von der Nut 28 abhebt und damit ebenfalls ein Evakuieren der Vertiefungen zuläßt.

Nach Abschluß der Unterdruckbehandlung wird sowohl die Unterdruckpumpeinrichtung 62 als auch der Rüttler 58 abgeschaltet und das Unterdruckgefäß 42 durch das Belüftungsventil 64 wieder belüftet.

Der Rand 26 eines Deckels 24 wird nun durch einen von außen nach innen gerichteten Druckgradient in die Ringnut 28 gedrückt und führt daher zu einem vakuumdichten Abschluß der in den Vertiefungen 12, 14 und 16 enthaltenen Formmasse, so daß diese Vertiefungen 12, 14 und 16 weiterhin unter Unterdruck gehalten werden und in dieser Form längere Zeit lagerbar sind, ohne in ihrer Verarbeitungsqualität beeinträchtigt zu werden.

## Patentansprüche

1. Verfahren zur Herstellung porenfreier Zahnformkörper aus Porzellan oder Keramik, bei welchem eine pulverisierte Formmasse mit einer Flüssigkeit vermischt, zu einer Form verarbeitet und nach dem Formen gebrannt wird, dadurch gekennzeichnet, daß die mit Flüssigkeit vermischte, pulverisierte Formmasse vor der Verarbeitung einer Rüttelbehandlung und einer Unterdruckbehandlung bei reduziertem Atmosphärendruck unterzogen wird.

2. Verfahren nach Anspruch 1, dadurch gekennzeichnet, daß der Druck auf mindestens 0,3 bar reduziert wird.

3. Verfahren nach Anspruch 1 oder 2, dadurch gekennzeichnet, daß die Unterdruckbehandlung mindestens 1 Minute dauert.

4. Verfahren nach einem der voranstehenden Ansprüche, dadurch gekennzeichnet, daß die Rüttelbehandlung mindestens während der Unterdruckbehandlung erfolgt.

5. Verfahren zur Herstellung von Formmassen für porenfreie Formkörper, insbesondere Zahnformkörper aus Porzellan oder Keramik, bei welchem eine Formmasse mit einer Flüssigkeit vermischt und nach dem Formen gebrannt wird, dadurch gekennzeichnet, daß die mit Flüssigkeit vermischte pulverisierte Formmasse vor dem Brennen in ein Anmischvolumen einer Anmischeinheit gegeben wird, daß ein die Anmischeinheit umgebender Raum evakuiert und dadurch in dem Anmischvolumen ein Vakuum erzeugt wird und daß der Raum anschließend auf Umgebungsdruck gebracht und dabei das Vakuum im Anmischvolumen aufrecht erhalten wird.

6. Anmischeinheit zur Herstellung von Formmassen für porenfreie Formkörper, vorzugsweise Zahnformkörper, aus Porzellan oder Keramik mit mindestens einem Anmischvolumen, wobei das Anmischvolumen als Vertiefung in einer Anmischplatte ausgebildet ist und mit einem das Anmischvolumen abdeckenden Deckel, dadurch gekennzeichnet, daß der Deckel (24) das gesamte Anmischvolumen (12, 14, 16) übergreifend ausgebildet ist, daß die Anmischeinheit (10, 24) so ausgebildet ist, daß bei in Vakuum-Umgebung verweilende Anmischeinheit (10, 24) das Anmischvolumen (12, 14, 16) evakuiert und daraufhin in Normaldruckumgebung das Anmischvolumen (12, 14, 16) vakuumdicht abgeschlossen ist.

7. Anmischeinheit nach Anspruch 6, dadurch gekennzeichnet, daß die Anmischplatte (10) mehrere Vertiefungen (12, 14, 16) aufweist.

8. Anmischeinheit nach Anspruch 7, dadurch gekennzeichnet, daß die Vertiefungen (12, 14, 16) eine unterschiedliche Größe aufweisen.

9. Anmischeinheit nach einem der Ansprüche 7 oder 8, dadurch gekennzeichnet, daß die Vertiefungen (12, 14, 16) nach zumindest einer Seite hin flach auslaufend ausgebildet sind.

10. Anmischeinheit nach einem der Ansprüche 7 bis 9, dadurch gekennzeichnet, daß die Anmischplatte (10) eine zwischen den Vertiefungen (16) liegende Arbeitsfläche (18) trägt.

11. Anmischeinheit nach einem der Ansprüche 6 bis 10, dadurch gekennzeichnet, daß die Anmischplatte (10) aus Glas oder Porzellan ist.

12. Anmischeinheit nach einem der Ansprüche 6 bis 10, dadurch gekennzeichnet, daß die Anmischplatte (10) aus Kunststoffmaterial hergestellt ist.

13. Anmischeinheit nach einem der Ansprüche 11 oder 12, dadurch gekennzeichnet, daß die Anmischplatte (10) aus weißem Material hergestellt ist.

14. Anmischeinheit nach einem der Ansprüche 6 bis 13, dadurch gekennzeichnet, daß Dichtflächen zwischen dem Deckel (24) und der Anmischplatte (10) im wesentlichen quer zu einer Einwirkungsrichtung des bei evakuiertem Anmischvolumen (12, 14, 16) auf den Deckel (24) und die Anmischplatte (10) wirkenden atmosphärischen Drucks verlaufen und durch diesen gegeneinander preßbar sind.

15. Anmischeinheit nach Anspruch 14, dadurch gekennzeichnet, daß die Dichtflächen zwischen dem Deckel (24) und der Anmischplatte (10) im wesentlichen senkrecht zu einer Einwirkungsrichtung des bei evakuiertem Anmischvolumen (12, 14, 16) auf den Deckel (24) und die Anmischplatte (10) wirkenden atmosphärischen Drucks verlaufen.

16. Anmischeinheit nach Anspruch 14 oder 15, dadurch gekennzeichnet, daß die Dichtflächen gegeneinander vorgespannt sind.

17. Anmischeinheit nach einem der Ansprüche 6 bis 16, dadurch gekennzeichnet, daß der Dekkel (24) mit weichelastisch ausgebildeten Dichträndern (26) versehen ist.

18. Anmischeinheit nach einem der Ansprüche 6 bis 17, dadurch gekennzeichnet, daß der Dekkel (24) aus elastischem Material hergestellt ist.

19. Anmischeinheit nach einem der Ansprüche 6 bis 18, dadurch gekennzeichnet, daß der Dekkel (24) aus durchsichtigem Material hergestellt ist.

20. Anmischeinheit nach einem der Ansprüche 6 bis 19, dadurch gekennzeichnet, daß der Dekkel (24) auf seiner Oberseite und die Anmischplatte (10) auf ihrer Unterseite bei einer Stapelung einer Anmischplatte (10) auf einem Deckel (24) formschlüssig ineinandergreifende Passungselemente (32, 34) aufweisen.

21. Anmischeinheit nach Anspruch 20, dadurch gekennzeichnet, daß die Passungselemente durch eine Ringnut (34) und einen Ringwulst (32) gebildet sind.

22. Anmischeinheit nach einem der Ansprüche 6 bis 21, dadurch gekennzeichnet, daß die Anmischplatte (10) um eine im wesentlichen senkrecht auf ihrer Oberfläche stehenden Achse gegenüber einem Fußteil drehbar ist.

23. Vorrichtung zur Herstellung von Formmassen für porenfreie Formkörper, insbesondere Zahnformkörper, aus Porzellan oder Keramik, mit einem die Formmasse aufnehmenden Unterdruckgefäß und einer damit verbundenen Unterdruckpumpeinrichtung, dadurch gekennzeichnet, daß in das Unterdruckgefäß (42) eine die Formmasse mit einem Anmischvolumen (12, 14, 16) aufnehmende Anmischeinheit (10, 24) einsetzbar ist und daß die Anmischeinheit (10, 24) das Anmischvolumen (12, 14, 16) bei Evakuierung des Unterdruckgefäßes (42) evakuierend und das Anmischvolumen (12, 14, 16) bei anschließender Belüftung des Unterdruckgefäßes (42) unter Vakuum haltend ausgebildet ist.

24. Vorrichtung zur Herstellung von Formmassen für porenfreie Formkörper, insbesondere Zahnformkörper, aus Porzellan oder Keramik mit einem die Formmasse aufnehmenden Unterdruckgefäß und einer damit verbundenen Unterdruckpumpeinrichtung, dadurch gekennzeichnet, daß in das Unterdruckgefäß (42) eine die Formmasse mit einem Anmischvolumen (12, 14, 16) aufnehmende Anmischeinheit (10) einsetzbar ist, daß das Unterdruckgefäß (42) in einem Bodenteil (44) eine Aufnahme (54) für eine Anmischeinheit (10, 24) aufweist, wobei die Aufnahme ein Ringwulst ist, welcher in eine entsprechend gestaltete bodenseitige Ausnehmung einer auf das Bodenteil aufgesetzten Anmischplatte eingreift.

25. Vorrichtung nach Anspruch 24, dadurch gekennzeichnet, daß die Aufnahme (54) aus elastischem Material ist.

26. Vorrichtung nach Anspruch 24 oder 25, dadurch gekennzeichnet, daß das Unterdruckgefäß (42) mehrere aufeinandergestapelte Anmischeinheiten (10, 24) aufnimmt.

**Claims**

1. A method for producing non-porous dental molded bodies made of porcelain or ceramics, wherein a pulverized molding mass is mixed with a liquid, processed to a form and baked after forming, characterized in that the pulverized molding mass mixed with liquid is subjected prior to processing to a vibration treatment and a negative pressure treatment at reduced atmospheric pressure.

2. Method as defined in claim 1, characterized in that the pressure is reduced to at least 0.3 bars.

3. Method as defined in claim 1 or 2, characterized in that the negative pressure treatment lasts at least 1 minute.

4. Method as defined in any of the preceding claims, characterized in that the vibration treatment is carried out at least during the negative pressure treatment.

5. Method for producing molding masses for non-porous molded bodies, in particular dental molded bodies made of porcelain or ceramics, wherein a molding mass is mixed with a liquid and baked after forming, characterized in that the pulverized molding mass mixed with liquid is passed prior to baking into a mixing volume of a mixing unit, that a space surrounding the mixing unit is evacuated and a vacuum thereby generated in the mixing volume and that the space is subsequently brought to atmospheric pressure and the vacuum hereby maintained in the mixing volume.

6. A mixing unit for producing molding masses for non-porous molded bodies, preferably dental molded bodies, made of porcelain or ceramics, comprising at least one mixing volume, wherein the mixing volume is designed as a recess in a mixing plate, and also comprising a lid covering the mixing volume, characterized in that the lid (24) is designed to overlap the entire mixing volume (12, 14, 16), that the mixing unit (10, 24) is designed such that while the mixing unit (10, 24) remains in a vacuum environment the mixing volume (12, 14, 16) is evacuated and thereupon in a normal pressure environment the mixing volume (12, 14, 16) is closed so as to be vacuum-tight.

7. Mixing unit as defined in claim 6, characterized in that the mixing plate (10) has a plurality of recesses (12, 14, 16).

8. Mixing unit as defined in claim 7, characterized in that the recesses (12, 14, 16) are of different sizes.

9. Mixing unit as defined in one of claims 7 or 8, characterized in that the recesses (12, 14, 16) end in a flat configuration towards at least one side.

10. Mixing unit as defined in one of claims 7 to 9, characterized in that the mixing plate (10) has a work surface (18) located between the recesses (16).

11. Mixing unit as defined in one of claims 6 to 10, characterized in that the mixing plate (10) is made of glass or porcelain.

12. Mixing unit as defined in one of claims 6 to 10, characterized in that the mixing plate (10) is produced from a plastic material.

13. Mixing unit as defined in one of claims 11 or 12, characterized in that the mixing plate (10) is produced from a white material.

14. Mixing unit as defined in one of claims 6 to 13, characterized in that sealing surfaces between the lid (24) and the mixing plate (10) extend substantially transversely to a direction of effect of the atmospheric pressure acting on the lid (24) and the mixing plate (10) when the mixing volume (12, 14, 16) is evacuated and are adapted to be pressed together by this pressure.

15. Mixing unit as defined in claim 14, characterized in that the sealing surfaces between the lid (24) and the mixing plate (10) extend substantially perpendicular to a direction of effect of the atmospheric pressure acting on the lid (24) and the mixing plate (10) when the mixing volume (12, 14, 16) is evacuated.

16. Mixing unit as defined in claim 14 or 15, characterized in that the sealing surfaces are biased towards one another.

17. Mixing unit as defined in one of claims 6 to 16, characterized in that the lid (24) is provided with soft elastic sealing edges (26).

18. Mixing unit as defined in one of claims 6 to 17, characterized in that the lid (24) is produced from elastic material.

19. Mixing unit as defined in one of claims 6 to 18, characterized in that the lid (24) is produced from transparent material.

20. Mixing unit as defined in one of claims 6 to 19, characterized in that the lid (24) is provided on its upper side and the mixing plate (10) on its lower side with fitting elements (32, 34) engaging positively in one another when a mixing plate (10) is stacked on a lid (24).

21. Mixing unit as defined in claim 20, characterized in that the fitting elements are formed by an annular groove (34) and an annular bead (32).

22. Mixing unit as defined in one of claims 6 to 21, characterized in that the mixing plate (10) is rotatable relative to a foot member about an axis substantially perpendicular to its surface.

23. A device for producing molding masses for non-porous molded bodies, in particular dental molded bodies, made of porcelain or ceramics, comprising a negative pressure vessel accommodating the molding mass and a negative pressure pump means connected therewith, characterized in that a mixing unit (10, 24) accommodating the molding mass in a mixing volume (12, 14, 16) is insertable into the negative pressure vessel (42) and that the mixing unit (10, 24) is designed to evacuate the mixing volume (12, 14, 16) during evacuation of the negative pressure vessel (42) and to maintain a vacuum in the mixing volume (12, 14, 16) during subsequent ventilation of the negative pressure vessel (42).

24. Device for producing molding masses for nonporous molded bodies, in particular dental molded bodies, made of porcelain or ceramics, comprising a negative pressure vessel accommodating the molding mass and a negative pressure pump means connected therewith, characterized in that a mixing unit (10) accommodating the molding mass in a mixing volume (12, 14, 16) is insertable into the negative pressure vessel (42), that the negative pressure vessel (42) has in a bottom part (44) a receiving means (54) for a mixing unit (10, 24), the receiving means being an annular bead engaging in a correspondingly designed recess in the bottom side of a mixing plate placed on the bottom part.

25. Device as defined in claim 24, characterized in that the receiving means (54) is made of elastic material.

26. Device as defined in claim 24 or 25, characterized in that the negative pressure vessel (42) accommodates a plurality of mixing units (10, 24) stacked on top of one another.

**Revendications**

1. Procédé pour fabriquer des corps moulés dentaires sans porosités en porcelaine ou en céramique, dans lequel une masse de moulage pulvérisée est mélangée à un liquide, est traité en un moule et, après le moulage, est cuite, caractérisé en ce que la masse de moulage pulvérisée, mélangée à du liquide, est soumise avant le traitement à une opération de secouage et à un traitement sous une pression atmosphérique réduite.

2. Procédé suivant la revendication 1, caractérisé en ce que la pression est réduite à au moins 0,3 bar.

3. Procédé suivant l'une des revendications 1 et 2, caractérisé en ce que le traitement sous pression réduite dure au moins une minute.

4. Procédé suivant l'une des revendications précédentes, caractérisé en ce que l'opération de secouage a lieu au moins pendant le traitement sous pression réduite.

5. Procédé pour fabriquer des masses de moulage de corps moulés sans porosités, en particulier de corps moulés dentaires, à partir de porcelaine ou de matière céramique, dans lequel une masse de moulage est mélangée à un liquide et est cuite après le moulage, caractérisé en ce que la masse de moulage pulvérisée, mélangée à du liquide, est versée dans un volume de mélange d'une unité de mélange, avant la cuisson, en ce qu'un espace entourant l'unité de mélange est amené sous vide et ainsi une pression réduite est produite dans le volume de mélange et en ce que l'espace est ensuite amené à la pression ambiante et la pression réduite dans le volume de mélange est maintenue.

6. Unité de mélange pour la préparation de masses de moulage de corps moulés sans porosités, de préférence de corps moulés dentaires, à base de porcelaine ou de matière céramique, comprenant au moins un volume de mélange, le volume de mélange étant réalisé sous la forme d'un évidement dans une plaque de mélange, et un couvercle recouvrant le volume de mélange, caractérisée en ce que le couvercle (24) est réalisé de manière à recouvrir le volume de mélange entier (12, 14, 16), en ce que l'unité de mélange (10, 24) est réalisée de façon que, lorsque l'unité de mélange (10, 24) séjourne dans un milieu sous vide, le volume de mélange (12, 14, 16) soit amené sous pression réduite et que le volume de mélange (12, 14, 16) soit alors fermé de manière étanche au vide dans un milieu sous pression normale.

7. Unité de mélange suivant la revendication 6, caractérisée en ce que la plaque de mélange (10) présente plusieurs évidements (12, 14, 16).

8. Unité de mélange suivant la revendication 7, caractérisée en ce que les évidements (12, 14, 16) présentent une grandeur différente.

9. Unité de mélange suivant l'une des revendications 7 et 8, caractérisée en ce que les évidements (12, 14, 16) sont réalisés de manière à s'étendre de façon aplatie au moins d'un côté.

10. Unité de mélange suivant l'une des revendications 7 à 9, caractérisée en ce que la plaque de mélange (10) porte une surface de travail (18) située entre les évidements (16).

11. Unité de mélange suivant l'une des revendications 6 à 10, caractérisée en ce que la plaque de mélange (10) est en verre ou en porcelaine.

12. Unité de mélange suivant l'une des revendications 6 à 10, caractérisée en ce que la plaque de mélange (10) est en une matière synthétique.

13. Unité de mélange suivant l'une des revendications 11 et 12, caractérisée en ce que la plaque de mélange (10) est préparée en une matière blanche.

14. Unité de mélange suivant l'une des revendications 6 à 13, caractérisée en ce que des surfaces d'étanchéité entre le couvercle (24) et la plaque de mélange (10) s'étendent sensiblement transversalement à une direction d'action de la pression atmosphérique agissant sur le couvercle (24) et la plaque de mélange (10) lorsque le volume de mélange (12, 14, 16) est sous pression réduite et en ce qu'elles sont comprimées l'une contre l'autre par cette pression.

15. Unité de mélange suivant la revendication 14, caractérisée en ce que les surfaces d'étanchéité entre le couvercle (24) et la plaque de mélange (10) s'étendent sensiblement perpendiculairement à une direction d'action de la pression atmosphérique agissant sur le couvercle (24) et la plaque de mélange (10) lorsque le volume de mélange (12, 14, 16) est sous pression réduite.

16. Unité de mélange suivant l'une des revendications 14 et 15, caractérisée en ce que les surfaces d'étanchéité sont préalablement pressées l'une contre l'autre.

17. Unité de mélange suivant l'une des revendications 6 à 10, caractérisée en ce que le couvercle (24) est pourvu de bords d'étanchéité (26) réalisés sous une forme souple et élastique.

18. Unité de mélange suivant l'une des revendications 6 à 17, caractérisée en ce que le couvercle (24) est réalisé en une matière élastique.

19. Unité de mélange suivant l'une des revendications 6 à 18, caractérisée en ce que le couvercle (24) est réalisé en une matière transparente.

20. Unité de mélange suivant l'une des revendications 6 à 19, caractérisée en ce que le couvercle (24) sur sa face supérieure et la plaque de mélange (10) sur sa face inférieure présentent, lors d'un empilage d'une plaque de mélange (10) sur un couvercle (24), des éléments d'adaptation (32, 34) qui entrent en prise mutuelle en réalisant une liaison par la forme.

21. Unité de mélange suivant la revendication 20, caractérisée en ce que les éléments d'adaptation sont formés par une rainure annulaire (34) et un bourrelet annulaire (32).

22. Unité de mélange suivant l'une des revendications 6 à 21, caractérisée en ce que la plaque de mélange (10) peut, autour d'un axe situé sensiblement perpendiculairement à sa surface, tourner par rapport à une partie de pied.

23. Dispositif de préparation de masses de moulage pour des corps moulés sans porosités, en particulier des corps moulés dentaires, en porcelaine ou en céramique, comprenant un récipient sous pression réduite dans lequel la masse de moulage est logée et un dispositif de pompe à vide qui y est relié, caractérisé en ce qu'une unité de mélange (10, 24) recevant la masse à mouler avec un volume de mélange (12, 14, 16) peut être introduite dans le récipient sous pression réduite (42) et en ce que l'unité de mélange (10, 24) est réalisée de manière à amener sous pression réduite le volume de mélange (12, 14, 16), lors de la mise sous vide du récipient sous pression réduite (42), et à maintenir sous vide le volume de mélange (12, 14, 16) lors d'une aération ultérieure du récipient sous pression réduite (42).

24. Dispositif de préparation de masses de moulage pour des corps moulés sans porosités, en particulier des corps moulés dentaires, en porcelaine ou en matière céramique, comprenant un récipient sous pression réduite dans lequel est logé la masse de moulage et un dispositif de pompe à vide qui lui est relié, caractérisé en ce qu'une unité de mélange (10) recevant la masse de moulage avec un volume de mélange (12, 14, 16) peut être introduite dans le récipient sous pression réduite (42), en ce que le récipient sous pression réduite (42) présente, dans une partie de fond (44), un siège (54) pour une unité de mélange (10, 24), le siège étant un bourrelet annulaire qui pénètre dans un évidement façonné de manière correspondante, du côté fond, d'une plaque de mélange placée sur la partie de fond.

25. Dispositif suivant la revendication 24, caractérisé en ce que le siège (54) est en une matière élastique.

26. Dispositif suivant l'une des revendications 24 ou 25, caractérisé en ce que le récipient sous pression réduite (42) reçoit plusieurs unités de mélange (10, 24) empilées l'une sur l'autre.

FIG.1

FIG.2

FIG.3

12

FIG.4